# EUROPEAN PATENT APPLICATION

(11) **EP 2 452 875 A2**
(43) Date of publication of application: **16.05.2012**
(21) Application number: 11250844.5
(22) Date of filing: 11.10.2011
(51) Int. Cl.: B64D 11/02

(54) **Aircraft potable water system**

(30) Priority: 10.11.2010 US 412365 P
(71) Applicant: Goodrich Corporation, Charlotte, North Carolina 28217 (US)
(72) Inventor: Harr, John A., Minerva, Ohio 44657 (US); Lei, Martin, Canal Fulton, Ohio 44514 (US); Mackullin, Bryan J., Akron, Ohio 44333 (US)
(74) Representative: Hargreaves, Timothy Edward

(57) **Abstract**

An aircraft potable water system (20) comprises outlet facilities (30) and a recirculation path (40) that supplies potable water thereto. The system (20) can operate in a high-usage condition whereat recirculation through path (40) is temporarily interrupted, thereby permitting supply water pressure to remain relatively high despite water being quickly tapped therefrom.

## Description

An aircraft potable water system typically supplies water to cabin outlet facilities for selective dispensing therefrom by crew and passengers. These uses can include, for example, ice-making, showering, teeth brushing, dish washing, cooking, coffee brewing, and/or toilet flushing. A potable water system can be designed so that water is continuously circulated through a recirculation path.

### SUMMARY

An aircraft potable water system is convertible between a normal-usage condition and a high-usage condition. In the normal-usage condition, water is continuously circulated through a recirculation path. In the high-usage condition, water recirculation is temporarily interrupted to ensure that outlet facilities are still provided with adequate flow rates. The potable water system is thereby able to accommodate a wide range of water flow rates without having to increase pump performance parameters.

### DRAWINGS

Figure 1 schematically shows an aircraft with a potable water system installed thereon.
Figures 2-4 are diagrams of a potable water system in a normal-usage condition, a high-usage condition, and a tank-fill-purge condition, respectively.

### DESCRIPTION

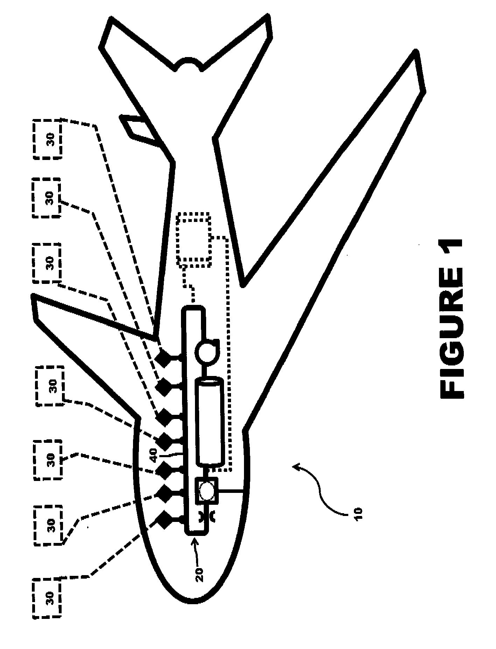

Referring now to the drawings, and initially to Figure 1, an aircraft 10 with a potable water system 20 is shown. The system 20 includes outlet facilities 30 and a recirculation water path 40 that supplies potable water thereto. Passengers and crew can selectively dispense potable water from the outlet facilities 30 for purposes such as, ice-making, showering, teeth brushing, dish washing, cooking, coffee brewing, toilet flushing, etc.

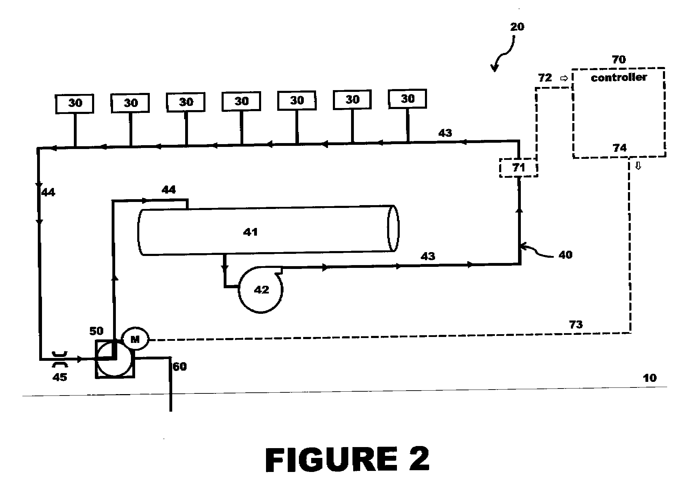

Referring additionally to Figure 2, the recirculation water path 40 incorporates a storage tank 41, a pump 42, delivery plumbing 43 connecting the pump discharge to the outlet facilities 30, and return plumbing 44 connecting the delivery line 43 to the storage tank 41. When the aircraft 10 is grounded and the system 20 is off (*i.e.,* the outlet facilities 30 are not serviceable), the storage tank 41 Is filled with potable water. When the system 20 is on (i.e., the outlet facilities 30 are serviceable), water is periodically is tapped from the delivery plumbing 43 at the outlet facilities 30, and untapped water is returned to the storage tank 41, via the return plumbing 44.

The storage tank 41 can have a capacity corresponding to the aircraft's potable water prerequisite and/or its fill frequency. The tank 41 can have any suitable size/shape and it can be situated at any appropriate site within the aircraft 10. And although only one tank 41 is shown In the drawings, tanks arranged in tandem may also be a feasible and fitting arrangement.

The pump 42 can be any conveying device that is capable of providing the outlet facilities 30 with an appropriate water flow rate (e.g., at least 1 gallon per minute or at least 4 liters per minute, at least 2 gallons per minute or at least 7 liters per minute, and/or at least 3 gallons per minute or at least 11 liters per minute) and an acceptable water pressure (e.g., at least 10 psig or at least 0.7 bar, at least 15 psig or at least 1 bar, at least 20 psig or at least 1.4 bar, and/or at least 25 psig or at least 1.7 bar). A motor driven centrifugal pump will often serve as a competent candidate for this commission. A plural pump setup, for Impel purposes and/or redundancy reasons, is possible and contemplated.

The delivery plumbing 43 and the return plumbing 44 can be any combination of conduits that accordingly conveys water through the recirculation path 40. This plumbing and/or these conduits can be formed from, for example, hose assemblies having PTFE tubes (polytetrafluoroethylene tubes), silicone liners, and stainless steel fittings. While the plumbing 43/44 can and may Integrate heaters, they might not be necessary in the recirculation path 40 due to the substantially continuous movement of water therein.

The recirculation water path 40 can also incorporate a flow restrictor 45 in its return plumbing 44 (and thus downstream of the outlet facilities 30 and upstream of the storage tank 41). This device 45 (e.g., an orifice) can be provided for the purpose of maintaining system pressure and a desired pressure drop. In some systems, the return plumbing 44 may itself perform this function whereby the restrictor 45 may not be necessary.

The water path 40 further incorporates a usage-condition appliance 50 that allows the system 20 to operate in a normal-usage condition and a high-usage condition. While the illustrated appliance 50 is merged with tank-filling-purging functions, a separate usage-condition appliance is equally plausible and presumed. Additionally or alternatively, other undertakings of the potable water system 20 and/or the aircraft 10 can be combined with the appliance 50.

The usage-condition appliance 50 can comprise a valve movable to at least two positions and/or having at least two ports. The valve can be an electrical valve, for example, which moves in response to electrical activation (*e.g.,* a solenoid valve or a motorized valve). The illustrated appliance 50 comprises a motorized valve that is movable to three positions and has three ports.

The appliance 50 is shown in its normal-usage condition in Figure 2. During normal-usage situations, water in the return plumbing 44 is routed back to the storage tank 41 and the recirculation cycle is repeated. A normal-usage state corresponds to circumstances wherein water is being dispensed at a relatively low rate (including not at all) from the outlet facilities 30.

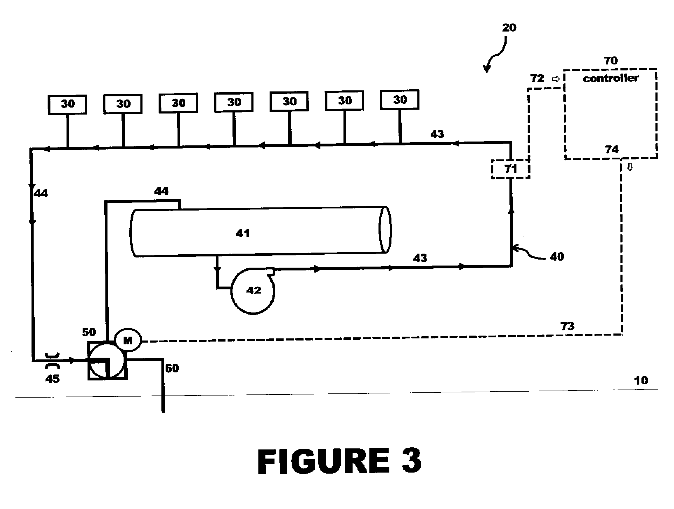

The appliance 50 is shown in its high-usage condition in Figure 3. In this condition, recirculation is temporarily Interrupted so that water pressure in the supply plumbing 43 remains relatively high despite liquid being quickly tapped therefrom.

A high-usage-condition conversion can be accomplished, for example, by briefly blocking the route of the back to the storage tank 41. In the illustrated embodiment, for example, the appliance valve 50 Is moved to a closed position. In any event, the potable water system 20 is able to adapt to such high-usage situations without an increase pump performance parameters. This can translate into lower capital costs for the system 20, reduced power draw during system operation, lighter weights, and/or more compact packaging

The ability of the system 20 to convert to a high-usage condition facilitates passenger enjoyment at an outlet facility 30 regardless of the occupancy of other facilities. For example, faucet flow will be fulfilling and shower downpour will be pleasing. And such a high-usage conversion feature can help ensure that the minimum pressure requirements of facility-correlated equipment (*e.g.,* coffee brewers, toilet flushers, etc.) will always be met.

The high-usage condition corresponds to circumstances wherein water is being tapped at high rate from the outlet facilities 30. Depending upon the aircraft 10 and its potable water system 20, this could occur upon the sole use of a high-volume facility 30 (*e.g.,* a shower) or upon simultaneous use of multiple facilities 30. The potable water system 20 can be designed so that high-usage conditions are the exception, rather than the rule.

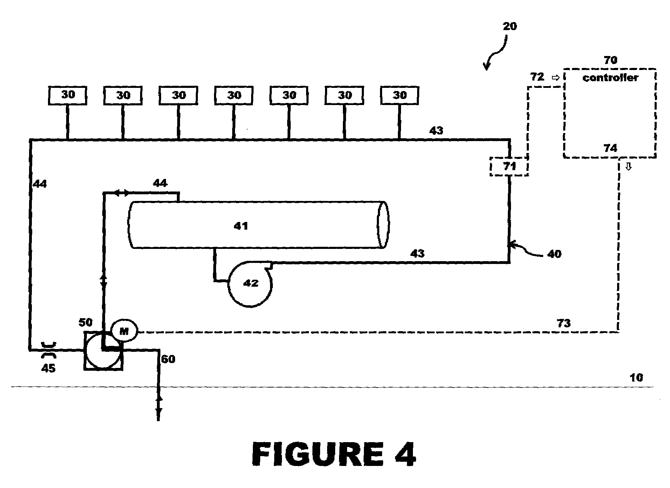

If tank-fill-purge functions are merged Into the appliance 50, as shown, it can also assume the third condition shown in Figure 4. In this condition, water from an exterior line 60 is connected to the storage tank 41 for filling and/or purging of the recirculation path 40. Valves and/or other flow-control devices, not shown in the drawings, are commonly activated during filling and purging procedures.

The potable water system 20 can additionally comprise a controller 70 to automatically convert the appliance 50 to the appropriate condition. The controller 70 can include, for example, a detector 71 that supplies information regarding the water flow rate within the supply plumbing 43 via input line 72. Based on this detection, the controller 70 can instruct the appliance 50 accordingly via instruction line 73.

The detector 71 can comprise, for example, a pressure transducer in the recirculation path 43 such as is shown In the drawings. The output signal of the illustrated transducer would be proportional to water pressure within the delivery plumbing 43. A detected drop in pressure would be indicative of a high-usage situation, whereby the appliance 50 could be instructed to convert to its high-usage condition.

The detector 71 can instead or additionally comprise other detection devices that monitor water use of outlet facilities 30. These can take the form of, for example, mat monitors, tambour door trackers, or other switches that can perceive potable water consumption.

In most circumstances, the appliance 50 will be intended to remain in its normal-usage condition for a majority of its use time. As the high-usage condition interrupts recirculation, it can be conserved for use only during brief high-usage times. To this end, the controller 70 can include a timer 74 that converts the appliance 50 to its normal-usage condition after a predetermined period of time (*e.g.,* less than 30 minutes, less than 20 minutes, less than 15 minutes, and/or less than 10 minutes). This timer-activated conversion can occur regardless of the input of the detector 71.

Other components, not shown in the drawings, will characteristically be included in the recirculation path 40. Water filters and purifiers will commonly reside within supply plumbing 43 and/or return plumbing 44. Valves and other flow-control devices will typically occupy many locations throughout a potable water system 20 to address abnormal operating situations.

Although the aircraft 10, the potable water system 20, the outlet facilities 30, the recirculation path 40, the appliance 50, the exterior line 60, and/or the controller 70 have been shown and described with respect to a certain embodiment or embodiments, it is obvious that equivalent alterations and modifications will occur to others skilled in the art upon the reading and understanding of this specification and the annexed drawings.

### REFERENCE NUMBERS

- 10: aircraft
- 20: potable water system
- 30: outlet facilities
- 40: recirculation path
- 41: storage tank
- 42: pump
- 43: supply plumbing
- 44: return plumbing
- 45: flow restrictor
- 50: water-usage appliance
- 60: exterior fill-purge line
- 70: controller
- 71: detector
- 72: input line
- 73: instruction line
- 74: timer

## Claims

1. An aircraft potable water system (20) comprising at an outlet facility (30) for selectively dispensing potable water, and a recirculation path (40) that supplies water to the outlet facility (30);
wherein the system (20) is convertible between a normal-usage condition, whereat water circulation through the recirculation path (40) is constant and continuous, and a high-usage condition, whereat water circulation is temporarily interrupted.

2. An aircraft potable water system (20) as set forth in the preceding claim, comprising a plurality of outlet facilities (30) and wherein the recirculation path (40) supplies water to the plurality of outlet facilities (30).

3. An aircraft potable water system (20) as set forth in the preceding claim, wherein the outlet facilities (30) are adapted for ice-making, showering, teeth brushing, dish washing, cooking, coffee brewing, and/or toilet flushing.

4. An aircraft potable water system (20) as set forth in any of the preceding A claims, wherein the conversion between the normal-usage condition and the high-usage condition is accomplished with a usage-condition appliance (50).

5. An aircraft potable water system (20) as set forth in the preceding claim, wherein the usage-condition appliance (50) comprises a valve movable to at least two positions, the first position corresponding to the normal-usage condition and the second position corresponding to the high-usage condition.

6. An aircraft potable water system (20) as set forth in the preceding claim, wherein the valve is an electric valve.

7. An aircraft potable water system (20) as set forth in the preceding claim, wherein the electric valve is a motorized valve.

8. An aircraft potable water system (20) as set forth in the preceding claim, wherein movement is approximately 90° between the two positions.

9. An aircraft potable water system (20) as set forth in any of the preceding 4-8 claims, wherein the usage-condition appliance (50) is merged with tank-fill-purge functions.

10. An aircraft potable water system (20) as set forth in any of the preceding claims, wherein the system (20) automatically converts between the normal-usage condition and the high-usage condition based on water flow rate to the outlet facilities (30).

11. An aircraft potable water system (20) as set forth in the preceding claim, further comprising a detector (71) that provides input regarding water consumption at the outlet facilities (30) and wherein the system (20) automatically converts between the normal-usage condition and the high-usage condition based on this Input.

12. An aircraft potable water system (20) as set forth in any of the preceding claims, comprising a timer (74) that returns the system (20) from its high-usage condition to its normal-usage condition after a predetermined period of time regardless of water flow rate to the outlet facilities (30).

13. An aircraft potable water system (20) as set forth in the preceding claim, wherein the predetermined period of time is less than 30 minutes.

14. An aircraft potable water system (20) as set forth in any of the preceding claims, wherein the recirculation water path (40) incorporates a storage tank (41), a pump (42), delivery plumbing (43) connecting the pump discharge to the outlet facilities (30), and return plumbing (44) connecting the delivery line (43) to the storage tank (41).

15. An aircraft (10) with the potable water system (20) set forth in any of the preceding claims installed thereon.
